Europäisches Patentamt

European Patent Office

Office européen des brevets

(11) Publication number: 0 314 633
A2

# (12) EUROPEAN PATENT APPLICATION

(21) Application number: 88830422.7

(22) Date of filing: 18.10.88

(51) Int. Cl.⁴: **B 60 C 9/00**
B 60 C 9/02

(30) Priority: 29.10.87 IT 2244487

(43) Date of publication of application:
03.05.89 Bulletin 89/18

(84) Designated Contracting States:
AT BE CH DE ES FR GB LI NL SE

(71) Applicant: VITTORIA S.p.A.
Via Padre Albisetti, 10
I-24030 Terno D'Isola Bergamo (IT)

(72) Inventor: Insom, Enrico Vittoria S.p.A.
Via Padre Albisetti, 10
I-24030 Terno d'Isola (Bergamo) (IT)

Gemini, Giovanni Vittoria S.p.A.
Via Padre Albisetti, 10
I-24030 Terno d'Isola (Bergamo) (IT)

(74) Representative: Cicogna, Franco
Ufficio Internazionale Brevetti Dott.Prof. Franco Cicogna
Via Visconti di Modrone, 14/A
I-20122 Milano (IT)

(54) Warp carcass for bicycles.

(57) The present invention relates to a warp carcass for tires for bicycles in general and, in particular, for sports and race bicycles, characterized in that it comprises at least two cross-plies, formed from layers having exclusively warp threads.

The plies consist of a plurality of threads, arranged with an adjoining relationship and mutually pressed so as to assume a substantially elliptical cross-section shape.

On one face of the plies there being moreover provided a binding layer consisting of a rubber latex.

Fig. 1

EP 0 314 633 A2

## Description

## WARP CARCASS FOR BICYCLES

### BACKGROUND OF THE INVENTION

The present invention relates to a warp carcass for tires for bicycles in general,and,in particular for sports and race bicycles.

As is known,a high performance sports and race bicycle tire generally comprises a tire carcass, which has a substantially toroidal shape and which includes a bladder which is protected,towards the rim of the wheel,by a flap member and/or in the inside of the tire,by an outer protecting strip member,the tire carcass being coated by a tread which is usually arranged above one or more antiperforation plies.

Known bicycle tires have been already greatly improved from the construction standpoint by using small weight high resistance threads and rubber compounds adapted to provide the tire with very high duration and performance characteristics,at a comparatively low cost.

In particular the carcass forming tire sleeves, which originally were formed by square rubberized plies,diagonally cut at 45°,have been improved by crossing at least two warp layers consisting of adjoining threads -that is without weft threads -which layers were then rubberized,diagonally cut and cross doubled.

In the case of tubular tire for bicycles,the toroidal carcasses,which were originally made by sealing the mentioned sleeves,by superimposing the sleeve edges or iterposing a tightness band,were successively made by seaming the edge portions and possibly interposing an optional bladder protection inner strip.

Also known is the fact that high pressure small weight bicycle tires comprise tire carcasses which are generally made starting from conventional square fabrics or cord materials,in which the warp threads are bound by weft threads arranged with a pitch of 1-2 cm.

The used fabric and cord materials have been further improved from the resistance standpoint and weight standpoint.

The small weight tire carcasses frequently comprise soft bead wires,made of high tension resistance and small elongation plastics material fibers,to provide the tire with folding characteristics.

Moreover antiperforation plies have been applied, arranged inside or outside of the tire carcass at the region covered by the tread or further extended to the tire walls and edge portions.

These plies,as they are made of warp layers having threads radially arranged,that is perpendicularly arranged with respect to the bicycle movement direction,assume a function of a further belt,thereby providing the tire with further improved performance characteristics.

On the other hand,as the plies have circumferentially arranged warp threads,that is warp threads arranged in the movement direction,these plies further improve the antiperforation and sliding characteristics of the tire.

### SUMMARY OF THE INVENTION

The main object of the present invention is to further improve the above disclosed bicycle tires, by providing a new type of tire having a very reinforced carcass both at the tread region and at the tire wall regions.

Another object of the present invention is to provide an improved bicycle tire which has very good resistance,sliding and antiperforation characteristics and can be constructed by using cylindrical plies, which,as is known,can be made in a single station machine in which the threads are simultaneously assembled and rubberized.

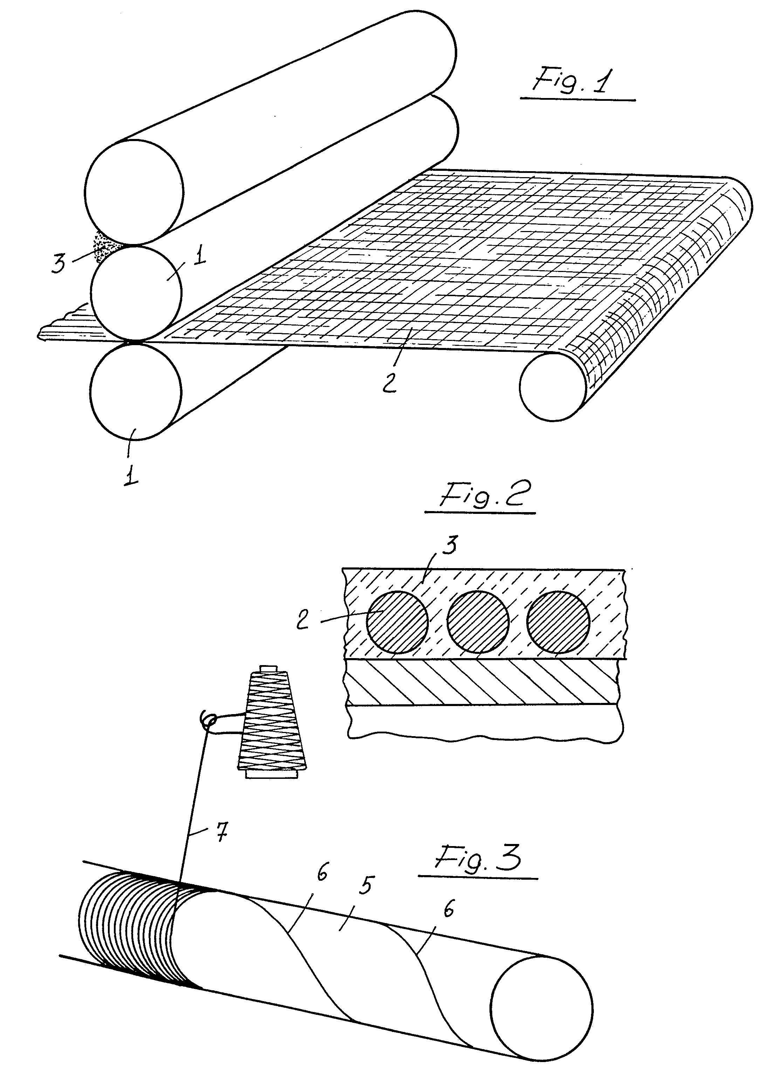

In this connection,it should be pointed out that in conventional systems for rubberizing square fabric or cord materials,the rubberizing step is carried out by causing the material to be rubberized to pass through parallel cylinders,as schematically shown in figure 1,and in this step the rubber mix, which is restrained and pressed between the surfaces of said cylinders,adheres to the fabric material on a great portion thereof,on the outer surface of each thread,as is schematically shown in figure 2.

On the other hand,in cylinder systems of the type shown in figure 3,the ply is usually made by tightly coiling the thread on a metal rotating cylinder,by suitably braking the thread package bearing carriage.

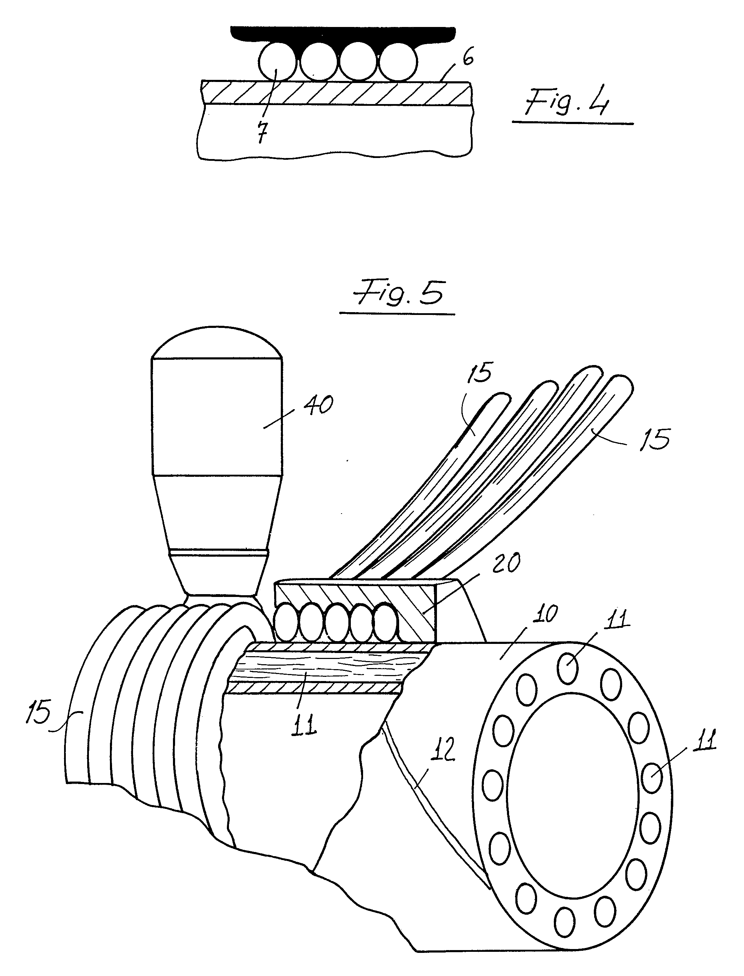

In this case,after having completely wound the cylinder,the textile tube is rubberized by one ore more processing steps,in which a rubberizing solution is used adapted to coat the textile tube according to the arrangement generally shown in figure 4. Then the rubberized tube is cut by following a spiral pattern engraved on the cylinder itself so as to provide a lozenge pattern,having a length substantially corresponding to the outer circumference or to a multiple of the outer circumference of the tire,and a width substantially corresponding to the extension,or a multiple of the extension,of the tire cross-section, also considering the seaming or bead wire holding edge portions,the threads being arranged at about 45° with respect to the base of said lozenge pattern.

A further object of the present invention is to provide a bicycle tire which,in addition to having improved operating characteristics,also has a comparatively low cost.

According to one aspect of the present invention, the above mentioned objects,as well as yet other objects,which will become more apparent hereinafter, are achieved by a warp carcass for tires for bicycle in general,and in particular for sports and race bicycles,characterized in that it comprises at least two cross plies,formed from layers including exclusively warp threads,said plies being formed by a plurality of adjoining natural or synthetic fibers yarns or threads,or according to a further improvement of the invention,of threads made of a synthetic fiber coated by a natural fiber (of the core-spun type), said threads being pressed so as to assume a substantially elliptical shape,on one face of said plies there being moreover provided a binding and impregnating layer of a rubber latex.

## BRIEF DESCRIPTION OF THE DRAWINGS

Further characteristics and advantages of the invention will become more apparent hereinafter from the following detailed description of a preferred,though not exclusive,embodiment of a warp carcass for bicycle in general,and in particular for sports and race bicycles,which is illustrated,by way of an indicative but not limitative example,in the figures of the accompanying drawings,where:

figure 1 is a schematic view illustrating parallel calendering and rubberizing cylinders for processing a cord fabric according to the prior art which has been hereinabove disclosed;

figure 2 is a schematic cross-sectional view illustrating the ply or layer material made by the above cylinders;

figure 3 shows a spiral coiling cylinder processing system;

figure 4 shows the ply or layer material which can be made by using the system represented in figure 3;

figure 5 shows the pressure winding step of the thread material for meking tire plies according to the present invention;

figure 6 shows,on a greatly enlarged scale, a sectioned detail of adjoining threads forming a tire ply according to the invention.

## DESCRIPTION OF THE PREFERRED EMBODIMENT

With reference to the figures of the accompanying drawings,and,more specifically,to figures 1 and 2 again,a method is herein shown for making bicycle tire plies by means of calendering,in which two parallel cylinders 1 are used therebetween the cord fabric 2 is caused to pass,thereto a rubber mix generally indicated at the reference number 3 is applied,so as to make the fabric or ply material shown in figure 2,said rubber mix 3 being interposed between the ply fabric threads on both faces of said ply.

Figure 3 shows a winding cylinder 5,provided with cutting spirals 6 engraved on the cylinder itself,thereon a thread 7 coming from a thread package is wound.

Thus,by arranging the threads in a tight adjoining relationship,there is obtained the ply shown in figure 4,in which the layer of rubber practically levels a single face of the layer or ply.

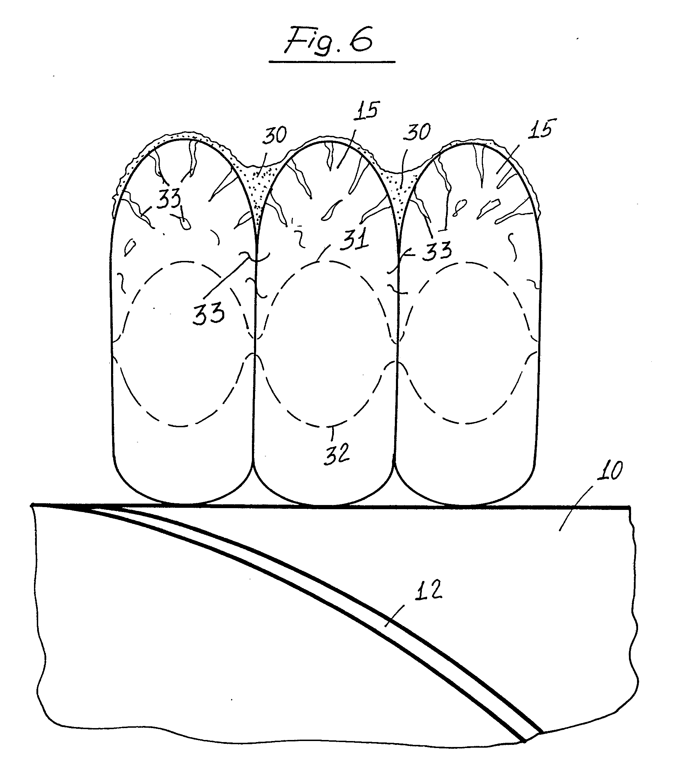

According to the present invention,as shown in figure 5,there is provided a rotating cylinder,which is preheated owing to the provision of heating gaps 11, therethrough warm water is circulated,said cylinder 10 being provided,on its surface,with a helicoidal slot 12 which is slanted at substantially 45° with respect to the cylinder axis.

On the cylinder 10 there are wound one or more threads 15,fed by one or more thread packages.

A main feature of the present invention is the provision of a pressing or compacting pushing member 20,which operates to mutually press the threads,which are already pretensioned by loads of preferably 150-400 gm/thread,depending on the nature and denier of said threads,so as to cause said threads to assume a substantially elliptical configuration,by applying a net varying load,depending on the nature and denier of the threads,which varying load is preferably from 500 to 3,500 grams.

On the thus wound threads there is carried out a rubberising step,by using a natural or synthetic latex having specifically designed formulations adapted to provide a controlled imbibition,i.e. a near complete imbibition,designed so as to not pass through the thread coils,in order not to reach the surface of the winding cylinder or drum,said rubberizing step being performed by using a suitable rubberizing or latex applying device 40.

As clearly shown in figure 6,in the case of a cotton thread,which has been shown in a very enlarged form,there is formed a latex gel surface layer 30, whereas the elastomeric material penetrates the cotton threads so as to form a plurality of serpentine particles consisting of molecular aggregates 33,up to a line generally indicated at 31,the liquor wetting the threads up to an innermost line,schematically indicated at 32.

The latex liquor,which penetrates the threads of the fabric causes said threads or fibers to contract, thereby further reducing the cross-section surface; simultaneously,the very small serpentine particles of the elastomeric material molecular aggregates, which are held and filtered by the draining effect of the threads will latch the fibers of the adjoining threads,thereby firmly binding them and expelling air therefrom.

Thus a chemical-physical compression action will be exerted between the threads,which adds to the mechanical compression action provided by the mentioned compacting pushing member.

The heating of the cylinder 10 which,for example,is brought to temperatures from 40°C to 65°C, causes the latex to be dried and the flexible tube wound and compacted on the cylinder to be stabilized,before spiral cutting said tube in order to form the lozenges to be doubled.

The compressed condition of the therads will prevent the latex material from penetrating, whereas the mentioned latching effect will provide the fabric layer or ply with the main characteristics that it is rubberized only on its outer surface or face,with the latex amount just sufficient to bind the two doubled lozenges.

Thus,the rubberizing processing is properly limited to the necessary amount,thereby affording the possibility of properly doubling the two warp layers in the finished crossed structure,with the adjoining threads mutually bound.

After the above disclosed step,each of the two structure layers will form,for the threads of the other layer,a sufficient binding both during the processing steps performed on the sleeve during the making of the tire and in the operation condition, as inflated carcass.

In fact,in this condition,the ply crossing angle is,at any points of the profile,smaller than that existing during the doubling step,since the plies will be arranged on greater diameters than the packaging diameter and,hence,the inflated carcass threads will tend to approach to one another.

In this connection it should be pointed out that the rubber material which,in the above disclosed prior structures is present both on the double surface and between thread and the adjoining thread,does not have any structural function in the work condition, whereas,on the other hand,its provision causes the carcass weight to greatly increase,which negatively affects the characteristics of the finished product.

The absence of the binding rubber material in the contacting zone of the adjoining threads, obtained in the tire according to the present invention,which has been advantageously replaced by the inframolecular binding of the latex aggregates,further provides a greater local flexibility in the tire structure mainly in the tread region thereof.

Thus,since a greater structural flexibility will generate less stresses,the compressed warp carcass according to the present invention will transmit to the user less vibrations,which represents a great advantage for the applications provided by the invention.

Moreover the tire will have a less rolling resistance,that is better sliding characteristics, since a less amount of elastomeric material in the tire structure will involve a less dissipated energy amount by hysteresis.

Another advantage of the tire structure according to the present invention,moreover,is that the threads are arranged with a very great evenness,which is due not only to the absence of rubber between the threads,but mainly to the fact that,in a few starting end winding operation,it is possible to strictly control the stretch of each single thread,whereas this perfect control can not be obtained as the number of the threads is very high,of the order of several thousands.

Thus,the mentioned great evenness of the pressed warp ply according to the present invention will provide the tire carcasses with great size evenness,while having a very strength structure,devoid of any localized weak point.

While the invention has been disclosed with reference to a preferred embodiment thereof,it should be apparent that the disclosed embodiment is susceptible to several modifications and variations,all of which will enter the spirit and scope of the inventive idea.

For example,while the invention has been disclosed with reference to a bicycle tire application, it should be apparent that it may also be applied for making very strong seals and gaskets.

## Claims

1. A warp carcass for tires for bicycles in general, in particular for sports and race bicycles, characterized in that it comprises at least two crosses plies, formed from layers including exclusively warp threads, said plies consisting of a plurality of adjoining and mutually compressed threads, having a substantially elliptical configuration, a binding layer being moreover provided on one face of said plies.

2. A warp carcass for tires for bicycles in general according to Claim 1, characterized in that the threads used for making said plies have a synthetic thread core encompassed by a natural thread.

3. A warp carcass according to Claim 1, characterized in that said binding layer consists of a latex, adapted to partially soak the adjoining threads.

4. A warp carcass according to one or more of the preceding Claims, characterized in that it comprises very small serpentine particles of molecular aggregates of said latex binding the fibers of adjoining threads.

5. A warp carcass according to one or more of the preceding Claims, characterized in that the face of said ply facing the cylinder is not impregn ated.

6. A warp carcass according to one or more of the preceding Claims, characterized in that said at least two crossed plies are made by spiral cutting threads helicoidally wound on a cylinder.

7. A method for making a warp carcass tire, characterized in that it comprises the steps of spiral winding on a heated cylinder one or more threads fed from one or more thread packages and subjecting the thread being wound to a pressing force in the axial direction of said threads.

8. A method according to the preceding Claim, characterized in that the pressing force is a mechanical pressing force, said force being provided by a pressing pushing member adapted to operate on the outer surface of said cylinder.

9. A method according to one or more of the preceding Claims, characterized in that it comprises the step of rubberizing the threads wound on said cylinder by means of a synthetic or natural latex, adapted to soak in a controlled way said threads and bind the fibres of said threads by means of microscopic serpentine particles of molecular aggregates of said latex which is helt and filtered by the draining effect of said threads.

10. A method according to one or more of the preceding Claims, characterized in that the soaking depth of said latex is greater than the soaking depth of said molecular aggregates, so as to cause the threads to contract toward the surface facing the heating cylinder, but so as not to reach said surface.

11. A method according to one or more of the preceding Claims, characterized in that it comprises the step of heating said latex by said cylinder so as to dry said latex and stabilize the textile tube wound and compacted on said cylinder, before spiral curring said tube to provide lozenge patterns to be doubled.

_Fig. 1_

_Fig. 2_

_Fig. 3_

_Fig. 4_

_Fig. 5_

Fig. 6